# FASCICULE DE BREVET EUROPEEN

(11) **EP 2 246 279 B1**
(45) Date de publication et mention de la délivrance du brevet: **12.06.2013**
(21) Numéro de dépôt: 10161211.7
(22) Date de dépôt: 27.04.2010
(51) Int. Cl.: B65G 57/18, B65G 57/03

(54) **Installation d'empilement de produits à équerres mobiles dans les trois directions de l'espace**
Anlage zum Stapeln von Produkten mit beweglichen Gehrungen in die drei Richtungen des Raumes
Facility for stacking products with brackets that can move in the three directions of the space

(30) Priorité: 27.04.2009 FR 0952756
(43) Date de publication de la demande: 03.11.2010
(73) Titulaire: Techman Mecanisation, 17100 Saintes (FR)
(72) Inventeur: Raudin, Bruno, 17100, LES GONDS (FR)
(74) Mandataire: Larcher, Dominique

(56) Documents cités:
- EP-A- 1 752 406
- BE-A- 702 739
- DE-A1- 1 683 866
- DE-A1- 2 301 151
- DE-A1- 4 412 830
- DE-B- 1 256 155
- DE-B1- 2 519 150
- DE-U1- 20 321 041
- FR-A- 2 259 771
- FR-A- 2 668 133
- JP-A- 60 002 527
- US-A- 5 964 570

## Description

### 1. Domaine de l'invention

Le domaine de l'invention est celui de la manutention, c'est-à-dire du déplacement à l'intérieur d'une unité de production comme une usine de produits en cours de fabrication ou de produits finis.

Plus précisément, l'invention concerne une installation d'empilement qui peut être mis en oeuvre afin de réunir de tels produits sur une palette.

### 2. Art antérieur

Plusieurs techniques sont actuellement mises en oeuvre afin de réunir des produits en vue de constituer des palettes. Pour cela, des installations de palettisation, ou palettiseurs, encore appelées dispositifs d'empilement de produits sont utilisés.

Ces palettiseurs sont généralement placés à la sortie d'une ligne de convoyage de produits dont l'entrée communique avec la sortie d'un poste de travail. Il peut par exemple s'agir d'une tenonneuse, c'est-à-dire d'une machine permettant de réaliser une rainure sur le chant d'une planche. Dans ce cas, le palettiseur permet de regrouper sur une palette les planches après que leur chant a été rainuré.

On connaît des palettiseurs mettant en oeuvre des manipulateurs. De tels manipulateurs comprennent au moins un bras robot apte à saisir chacun des produits à palettiser et à les déplacer dans les trois directions de l'espace afin de les déposer sur une palette.

De tels palettiseurs présentent l'inconvénient d'être encombrants et d'être particulièrement coûteux.

La mise en oeuvre de bras robot présente également l'inconvénient que les produits manipulés sont maintenus par pincement. Il est donc nécessaire de contrôler le pincement des produits afin d'éviter leur détérioration. Ceci est assez délicat à réaliser. Ce type de palettiseur est donc préférentiellement utilisé pour la manipulation de produits robustes.

On connaît également des palettiseurs à fourches qui consistent à constituer une couche de produits sur une fourche puis à déposer la couche constituée sur une palette. Pour cela, le niveau supérieur de la palette peut être placé au niveau de la fourche au moyen d'un élévateur, puis la fourche est décalée par rapport à la palette de façon à ce que la couche de produits y soit déposée. Selon une autre approche, la fourche sur laquelle est constituée une couche de produits peut être déplacée verticalement à proximité du niveau supérieur de la palette, puis décalée parallèlement à la surface de la palette pour y déposer la couche de produits.

Les palettiseurs de ce type présentent l'inconvénient de nécessiter la mise en oeuvre d'élévateur ou de moyens complexes pour assurer le déplacement des fourches. Ils sont donc relativement coûteux et encombrant.

On connaît également les palettiseurs à équerres qui sont couramment utilisés pour empiler des produits. L'invention concerne plus particulièrement ce type de palettiseurs.

Un premier type de palettiseur à équerres comprend essentiellement un poste de constitution d'une couche de produits, un poste d'empilement de couches successives de produits sur une palette, deux équerres mobiles le long d'un premier axe vertical et d'un deuxième horizontal et destinées à supporter des extrémités opposées des produits réunis en couche, et des moyens d'élévation des produits à l'entrée du poste de constitution de couche.

Les moyens d'élévation agissent sur chacun des produits à palettiser de manière à les mettre au niveau du poste de constitution pour y constituer une couche de produits sur les équerres. De tels moyens d'élévation peuvent par exemple comprendre un convoyeur vertical à bande. Ce convoyeur place un à un les produits devant les équerres placées à sa sortie. Les produits sont déposés sur les équerres au moyen d'un poussoir afin de constituer une couche. Les équerres sont ensuite translatées verticalement de la sortie du convoyeur vers le poste d'empilement à proximité de la surface supérieure d'une palette. Elles sont ensuite déplacées selon un axe horizontal de façon qu'elles soient écartées l'une de l'autre pour déposer la couche de produits sur la palette. Les équerres sont ensuite translatées verticalement et ramenées à la sortie du convoyeur. Elles sont rapprochées l'une de l'autre. Le cycle de pose peut alors être réitéré jusqu'à constituer une palette.

Un deuxième type de palettiseur à équerres comprend essentiellement un poste de constitution d'une couche de produits, un poste d'empilement de couches successives de produits sur une palette, deux équerres mobiles le long d'un axe horizontal et destinées à supporter des extrémités opposées des produits réunis en couche, des moyens d'élévation des produits à l'entrée du poste de constitution de couche, et un élévateur disposé dans le poste d'empilement pour déplacer verticalement une palette.

Les moyens d'élévation agissent sur chacun des produits à palettiser de manière à les mettre au niveau du poste de constitution et à constituer une couche de produits sur les équerres. De tels moyens d'élévation peuvent par exemple comprendre un convoyeur vertical à bande. Ce convoyeur place un à un les produits devant les équerres placées à sa sortie. Les produits sont déposés sur les équerres au moyen d'un poussoir afin de constituer une couche.

Un élévateur placé en dessous des équerres et sur lequel repose une palette est actionné afin de translater verticalement la palette depuis le sol jusqu'au-dessous des équerres. Après que la palette a été placée juste en dessous des équerres, les équerres sont déplacées selon un axe horizontal de façon qu'elles soient écartées l'une de l'autre pour déposer la couche de produits sur la palette. La palette est ensuite abaissée. Les équerres sont alors rapprochées l'une de l'autre de manière qu'une nouvelle couche de produits puisse y être constituée et un nouveau cycle de dépose est mis en oeuvre.

Les palettiseurs à équerres sont couramment utilisés. Ils présentent l'avantage de permettre de constituer efficacement des palettes de produits. Ils présentent toutefois quelques inconvénients.

Le document DE-A1-23 01 151 décrit un autre palettiseur à équerres.

Le document JP 60002527 décrit une installation correspondant au préambule de la revendication 1.

### 3. Inconvénients de l'art antérieur

Un inconvénient de ces palettiseurs à équerres est lié au fait que le poste d'empilement est situé juste en dessous du poste de constitution de couche. La hauteur d'empilement des produits sur la palette est donc limitée à la distance séparant le plan de constitution de la couche de produit et le plan dans lequel s'étend la surface supérieure de la palette vierge posée dans le poste d'empilement.

Un autre inconvénient de ces palettiseurs à équerres est qu'ils nécessitent la mise en oeuvre de moyens d'élévation des produits pour amener les produits dans le plan de constitution de la couche.

En outre, ces palettiseurs nécessitent la mise en oeuvre de poussoirs pour constituer la couche de produits en sortie des moyens d'élévation.

La mise en oeuvre de ces moyens d'élévation et poussoirs implique que ce type de palettiseurs est assez encombrant et coûteux à réaliser.

La mise en oeuvre de ces palettiseurs à équerres présente encore l'inconvénient de générer des temps morts dans les cycles d'empilement des couches de produits.

En effet, chaque fois qu'une couche de produits est constituée, l'alimentation du palettiseur en produits est arrêtée jusqu'à ce que les équerres soient replacées dans le poste de constitution de couche après avoir déposé la dernière couche constituée sur la palette.

Par ailleurs, les palettiseurs à équerres sont assez peu polyvalents dans la mesure où ils ne peuvent pas permettre l'empilement de couches de produits de tailles différentes, ou l'empilement d'un produit longiforme, comme une planche, dans un sens et dans l'autre (sens de la longueur et sens de la largeur). Il est donc nécessaire de mettre en oeuvre plusieurs palettiseurs selon que l'on souhaite empiler des produits dans un sens ou dans l'autre.

Le palettiseur décrit dans le document DE-A1-2301151 ne met pas en oeuvre de butée arriere d'alignement vertical des couches de produits avec le poste d'empilement. La technique décrite dans ce document ne permet donc pas d'obtenir un alignement parfait des couches de produits au poste d'empilement.

### 4. Objectifs de l'invention

L'invention a notamment pour objectif de pallier ces inconvénients de l'art antérieur.

Plus précisément, un objectif de l'invention est de fournir, dans au moins un mode de réalisation de l'invention, un palettiseur à équerres qui permette de constituer des empilements de couche de produit(s) présentant une hauteur importante.

Un autre objectif de l'invention est de mettre en oeuvre, dans au moins un mode de réalisation de l'invention, un tel palettiseur qui soit peu encombrant et peu onéreux, à tout le moins comparativement aux palettiseurs à équerres selon l'art antérieur.

L'invention a encore pour objectif de fournir, dans au moins un mode de réalisation de l'invention, un tel palettiseur qui conduise à augmenter les cadences d'empilement des couches de produit(s).

L'invention poursuit également l'objectif de produire, dans au moins un mode de réalisation de l'invention, un tel palettiseur qui soit polyvalent, c'est-à-dire qui puisse être mis en oeuvre pour assurer la palettisation de couches de produit(s) de tailles différentes.

### 5. Exposé de l'invention

Ces objectifs, ainsi que d'autres qui apparaîtront par la suite, sont atteints à l'aide d'une installation d'empilement de produits, telle que revendiquée dans la revendication 1. Ladite installation comprend :
- un poste de constitution d'au moins une couche d'au moins un produit ;
- un poste d'empilement de couches successives de produits,
   ledit poste de constitution comprenant au moins deux équerres destinées à supporter des extrémités opposées dudit au moins un produit, lesdites équerres étant mobiles le long de deux axes :
- un premier axe vertical, et
- un deuxième horizontal entre au moins une position dans laquelle elles sont rapprochées pour supporter ladite couche et une position dans laquelle elles sont éloignées pour assurer le dépôt de ladite couche dans ledit poste d'empilement.

Selon l'invention, ledit poste d'empilement est implanté au sol de manière décalée horizontalement par rapport audit poste de constitution, et l'installation comprend des moyens d'entraînement des équerres permettant d'entraîner lesdites équerres le long d'un troisième axe orthogonal aux premier et deuxième axes.

Ainsi, l'invention repose sur une approche tout à fait originale d'empilement de produit(s) réuni(s) en couches.

Cette approche consiste à prévoir que le poste d'empilement est implanté au sol de manière décalée horizontalement par rapport au poste de constitution, et que les équerres sont mobiles en translation selon trois axes :
- un premier axe vertical pour permettre de déplacer en hauteur les équerres ;
- un deuxième axe horizontal pour permettre d'écarter les équerres l'une de l'autre afin de déposer la couche de produit(s) qu'elle supporte sur une palette disposée dans le poste d'empilement ;
- selon un troisième axe, perpendiculaire aux premier et deuxième axes, pour permettre de déplacer horizontalement les équerres entre le poste de constitution de couche et le poste d'empilement.

Cette approche permet d'augmenter la capacité de chargement en hauteur de la palette. En effet, celle-ci est seulement limitée par la course de déplacement des équerres selon le premier axe vertical. Au contraire, selon les palettiseurs à équerres de l'art antérieur, les postes de constitution de couche et d'empilement sont disposés exactement l'un en dessous de l'autre en sorte que la hauteur de chargement de la palette est limitée par l'espace séparant le plan de constitution des couches et la surface supérieure d'une palette vierge disposée dans le poste d'empilement.

Cette approche permet également d'éviter la mise en oeuvre de moyens d'élévation des produits avant de les réunir en couche sur les équerres.

En effet, dans les techniques de l'art antérieur, le plan de constitution des couches doit être placé à une hauteur relativement importante du sol de façon que la hauteur d'empilement des couches sur la palette ne soit pas trop faible. Il est donc nécessaire de prévoir des moyens d'élévation pour placer les produits dans le plan de constitution de couche.

Selon l'invention, la hauteur d'empilement de la palette n'est pas liée à la hauteur du plan de constitution des couches. Il n'est donc pas nécessaire, pour obtenir une hauteur d'empilement convenable, que le plan de constitution des couches soit très élevé du sol. La technique selon l'invention permet donc de prévenir la mise en oeuvre de moyens d'élévation des produits. Une installation selon l'invention est donc moins coûteuse et moins encombrante qu'un palettiseur selon l'art antérieur.

Un produit au sens de l'invention est un produit autoportant, c'est-à-dire un produit présentant une résistance mécanique suffisante pour pouvoir être maintenu seulement à chacune de ses extrémités sans que sa flexibilité soit trop importante. Il peut par exemple s'agir de planches, de lames de parquet, de panneaux de bois, de cartons, de caisses, de tubes ou profilés métalliques, de portes, de complexages divers...

Selon le type de produits manipulés, une couche peut être constituée par une pluralité de produits regroupés ensemble. Il peut par exemple s'agir d'une couche de lame de parquet. Une couche peut également être constituée par un seul et unique produit, lequel constitue alors en lui-même la couche. Ceci peut être le cas lorsque le produit manipulé est un panneau.

Selon une caractéristique de l'invention, une installation selon l'invention comprend un sous-ensemble mobile incluant lesdits moyens d'entraînement desdites équerres et comprenant au moins une butée d'alignement vertical de ladite couche par rapport audit poste d'empilement.

Le fait de prévoir que cette butée est embarquée sur le sous-ensemble permet d'éviter de mettre en oeuvre une butée arrière fixe qu'il faudrait contourner pour assurer l'empilement des couches. Cette approche permet donc de réduire la taille de l'installation, et de réduire le temps de cycle.

Selon l'invention, ledit sous-ensemble mobile comprend une deuxième butée d'alignement vertical de ladite couche par rapport audit poste d'empilement, lesdites première et deuxième butées étant décalées horizontalement l'une de l'autre pour permettre une dépose de couches en quinconce dans ledit poste d'empilement.

Le fait de déposer des couches successives en quinconce permet de renforcer la stabilité de l'empilement. Ceci est particulièrement intéressant pour l'empilement de certains produits non stables.

Une installation selon l'invention comprend préférentiellement deux sous-ensembles mobiles comprenant chacun une desdites équerres, et disposés de part et d'autre dudit poste de constitution, au moins un desdits sous-ensembles étant monté mobile par rapport audit poste de constitution selon une direction permettant d'ajuster l'écartement entre lesdits sous-ensembles.

Un palettiseur selon l'invention peut de ce fait être réglé de manière à permettre l'empilement de produits de tailles différentes.

Avantageusement, ledit poste de constitution comprend des moyens de constitution d'au moins une couche desdits produits, lesdits moyens de constitution comprenant au moins un premier butoir et des moyens d'acheminement desdits produits contre ledit au moins un premier butoir.

Ceci permet de constituer efficacement et simplement une couche de produits.

Selon une caractéristique avantageuse, lesdits moyens de constitution comprennent un deuxième butoir escamotable disposé en amont dudit premier butoir.

Ceci peut permettre d'initier la constitution d'une nouvelle couche alors que la première est en cours de déplacement vers le poste d'empilement. La cadence d'empilement peut alors être augmentée.

Lesdits moyens d'acheminement comprennent préférentiellement au moins un convoyeur.

Dans ce cas, ledit convoyeur présente une entrée, ladite entrée étant destinée à être placée dans le prolongement de la sortie d'un poste de production desdits produits.

La conception de l'installation selon l'invention permet d'éviter la mise en oeuvre de moyens d'élévation des produits en amont des équerres, comme cela a été expliqué plus haut. L'entrée d'une installation selon l'invention peut donc être directement placée dans le prolongement de la sortie d'un poste de travail situé en amont de l'installation.

Selon un aspect préféré de l'invention, au moins un desdits sous-ensembles comprend un taquet de soutien escamotable dans le prolongement desdites équerres.

Ceci peut permettre de soutenir des produits de grande longueur, en particulier de longueur supérieure à celle des équerres.

### 6. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 illustre schématiquement une vue de côté d'une installation selon l'invention ;
- la figure 2 illustre schématiquement une vue arrière d'une installation selon l'invention ;
- la figure 3 illustre schématiquement la mise en oeuvre d'un taquet de soutien ;
- la figure 4 illustre un empilement en quinconce de couches de produits.

### 7. Description d'un mode de réalisation de l'invention

### 7.1 Rappel du principe de l'invention

Le principe général de l'invention consiste, dans un palettiseur à équerres, à prévoir que le poste d'empilement est implanté au sol de manière décalée horizontalement par rapport au poste de constitution, et que les équerres sont mobiles en translation selon trois axes :
- un premier axe vertical pour permettre de déplacer en hauteur les équerres ;
- un deuxième axe horizontal pour permettre d'écarter les équerres l'une de l'autre afin de déposer la couche de produit(s) qu'elles supportent sur une palette disposée dans le poste d'empilement ;
- selon un troisième axe, perpendiculaire aux premier et deuxième axes, pour permettre de déplacer horizontalement les équerres entre le poste de constitution de couche et le poste d'empilement.

Cette approche permet d'augmenter la capacité de chargement en hauteur de la palette.

Cette approche permet également d'éviter la mise en oeuvre de moyens d'élévation des produits avant de les réunir en couche sur les équerres.

Une installation selon l'invention est donc moins coûteuse et moins encombrante qu'un palettiseur selon l'art antérieur.

### 7.2 Exemple d'un mode de réalisation d'un palettiseur selon l'invention

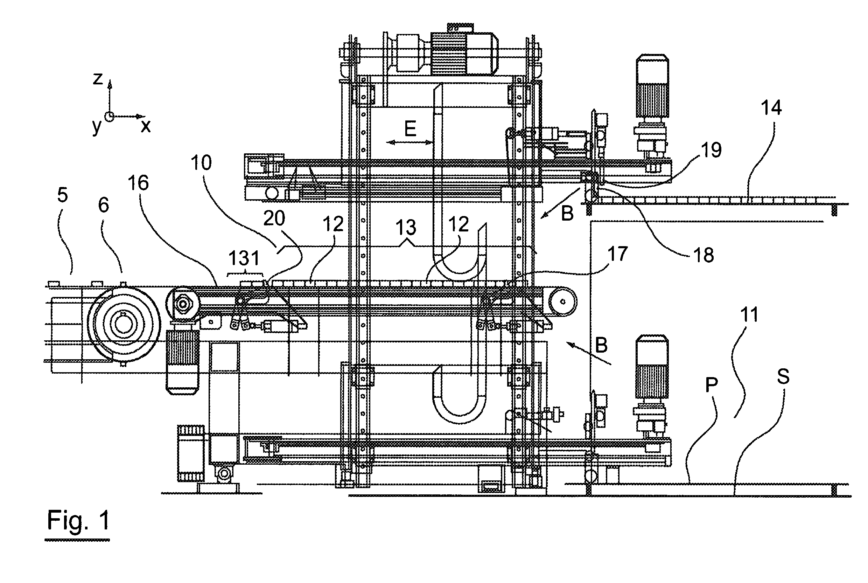

On présente, en relation avec les figures 1 à 4, un mode de réalisation d'une installation d'empilement selon l'invention.

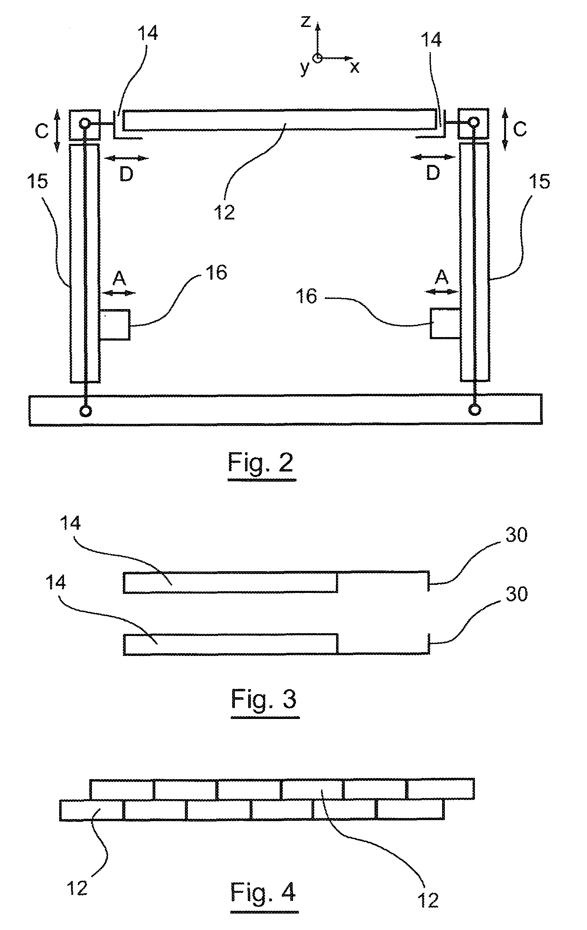

La figure 1 illustre une vue de côté et la figure 2 illustre une vue arrière d'un palettiseur selon l'invention.

Un tel palettiseur comprend un poste 10 de constitution de couches 13 de produits 12. Dans ce mode de réalisation, les produits 12 sont des panneaux rainurés, comme par exemple des dalles de plafond.

Il comprend également un poste 11 d'empilement de couches 13 successives de produits 12.

Comme cela apparaît, le poste d'empilement 11 est implanté au sol S de manière décalée horizontalement par rapport au poste de constitution 10. Il en est également décalé de manière verticale.

Une palette P est placée dans le poste d'empilement 11. Dans des variantes, il pourra s'agir d'une palette à ranches, de chevrons... Selon une autre variante, aucun support de ce type pourra être prévu. Dans ce cas, les produits pourront être directement empilés sur un convoyeur transversal ou longitudinal.

Le poste de constitution 10 comprend deux équerres 14. Les équerres 14 sont disposées de part et d'autre du poste de constitution 10. Elles sont destinées à supporter des extrémités opposées des produits 12 réunis pour y former une couche 13.

Les équerres sont mobiles en translation le long de trois axes :
- un premier axe vertical Z (flèches C) ;
- un deuxième horizontal Y (flèches D) ;
- un troisième axe X (flèches E) perpendiculaire aux axes Z et Y.

Ainsi, comme il sera décrit plus en détail par la suite, les équerres 14 peuvent être déplacées horizontalement selon l'axe X depuis le poste de constitution 10 vers le poste d'empilement 11, et inversement. Elles peuvent également être déplacées en hauteur selon l'axe Z. Les équerres peuvent encore être déplacées horizontalement selon l'axe Y entre au moins une position dans laquelle elles sont rapprochées pour supporter la couche 13 et une position dans laquelle elles sont éloignées de telle sorte qu'elles ne coopèrent plus avec les extrémités des produits 12 constituant la couche 13 pour assurer le dépôt de cette couche 13 dans le poste d'empilement 11.

Ce palettiseur comprend deux sous-ensembles mobiles 15. Ces sous-ensembles mobiles 15 sont montés mobiles en translation sur un châssis fixe 16 selon les flèches A. L'écartement entre les sous-ensembles 15 peut ainsi être modifié. De cette façon, le palettiseur peut permettre de palettiser des produits de différentes tailles. En particulier, comme il sera décrit plus en détail par la suite, un tel palettiseur peut permettre de palettiser les panneaux rainurés aussi bien dans le sens de la longueur que dans le sens de la largeur.

Les sous-ensembles 15 sont guidés dans des rails et leur mise en mouvement est obtenue au moyen d'un moteur et d'une transmission par chaîne. Dans des variantes, la mise en mouvement des sous-ensembles 15 pourra être obtenue au moyen d'un vérin. La transmission pourra être réalisée par courroie de préférence crantée, par système de type vis/écrou ou pignon/crémaillère.

Les déplacements des deux sous-ensembles 15 sont indépendants les uns des autres. Dans une variante, leur déplacement peut être assuré manuellement. Dans une autre variante, il peut être lié au réglage de la machine placée en amont. Dans ce cas, l'écartement de la machine en amont entraîne le déplacement des sous-ensembles.

Dans une variante, un seul des deux sous-ensembles 15 pourra être mobile.

Chaque ensemble mobile 15 comprend une équerre 14, et des moyens d'entraînement de cette équerre 14 selon les axes X, Y et Z. Ces moyens d'entraînement comprennent des patins à billes guidés sur des rails prismatiques. La mise en mouvement des équerres est assurée par des moyens de transmission comprenant des ensembles chaînes à rouleaux et pignons entraînés par des moteurs.

Dans des variantes, la mise en mouvement des équerres 14 pourra être réalisée par des vérins pneumatiques ou hydrauliques. Les moyens de transmission pourront comprendre des courroies de préférence crantées, des systèmes vis/écrou ou pignon/crémaillère.

Le guidage des équerres 14 pourra être réalisé au moyen de galets, cassettes à rouleaux cylindriques, par douilles à billes ou guidage lisse.

Tout autre moyen de guidage, de transmission et d'entraînement adapté pourra bien sûr être mis en oeuvre pour assurer la mise en mouvement des équerres 14 et des sous-ensembles 15.

Le poste de constitution 10 comprend des moyens de constitution d'une première couche 13 de produits. Ces moyens de constitution sont portés par chaque sous-ensemble 15. Ils comprennent un premier butoir 17 et des moyens d'acheminement des produits contre le premier butoir 17. Les moyens d'acheminement sont constitués par un convoyeur à bande 16.

Chacun des sous-ensembles 15 comprend donc un convoyeur à bande 16, ainsi qu'un premier butoir 17. Ce butoir 17 est escamotable.

Chacun des sous-ensembles 15 comprend un deuxième butoir escamotable 20 disposé en amont du premier butoir 17.

Les convoyeurs 16 présentent une entrée E, qui destinée à être placée dans le prolongement de la sortie S d'un poste de production des produits. Dans ce mode de réalisation, le poste de production est constitué par une tenonneuse. Un palettiseur selon l'invention pourra également être installé à la sortie de poste de production d'un autre type.

Chaque sous-ensemble 15 comprend une première 18 et une deuxième 19 butées escamotables d'alignement vertical de la couche par rapport au poste d'empilement 11. Les première et deuxième butées 18, 19 sont décalées horizontalement l'une de l'autre pour permettre une dépose de couches en quinconce dans le poste d'empilement 11.

Les butées 18 et 19 sont actionnées par des vérins pneumatiques. Dans des variantes, elles pourront être actionnées par des vérins électriques, hydrauliques ou par tout autre moyens adapté.

### 7.3 Exemple de mise en oeuvre d'un palettiseur selon l'invention

Le fonctionnement d'un palettiseur selon l'invention va maintenant être expliqué.

Dans ce mode de réalisation, il est disposé à la sortie d'une tenonneuse. Une tenonneuse permet de créer des rainures dans deux chants parallèles d'un panneau rainuré. Un panneau rainuré présente une rainure sur chacun de ses chants. Il doit donc être passé dans la tenonneuse dans le sens de la longueur puis dans le sens de la largeur.

Les panneaux rainurés sont dans un premier temps travaillés dans le sens de la longueur.

Les panneaux rainurés 12 arrivent un à un à la sortie S de la tenonneuse. Ils s'engagent ensuite sur les convoyeurs 16. Les convoyeurs 16 déplacent les panneaux rainurés 12 jusqu'à ce qu'ils arrivent en butée contre le butoir 17. Progressivement une couche 13 de panneaux rainurés 12 se constitue.

Dès qu'une couche 13 est constituée, le deuxième butoir 20 est escamoté, comme cela est représenté sur la figure 1, de telle manière que la constitution d'une deuxième couche 13' est initiée.

Dès que la couche 13 est constituée, les équerres 14 sont légèrement déplacées selon l'axe Z afin de décoller la couche 13 des convoyeurs 16.

Dès que les équerres 14 quittent le poste de constitution 10, le butoir 20 est replié en sorte que la couche dont la constitution a débutée achève d'être constituée sur le butoir 17. Une autre couche peut dans l'intervalle commencer à être constituée contre le butoir 20 de nouveau escamoté.

Les équerres 14 sont déplacées selon l'axe X jusqu'au-dessus du poste 11 d'empilement. La butée 19 est alors escamotée, puis les équerres 14 sont reculées jusqu'à venir en appui contre cette butée 19. La couche 13 est alors parfaitement alignée avec la palette P se trouvant dans le poste d'empilement 11.

Les équerres 14 sont ensuite translatées selon l'axe Z vers la palette P jusqu'en proximité de la surface supérieure de la palette P.

Les équerres sont ensuite déplacées selon l'axe Y de telle manière qu'elles occupent une position dans laquelle elles sont éloignées l'une de l'autre en sorte qu'elles ne coopèrent plus avec les extrémités des panneaux rainurés 12 constituant la couche 13. La couche est alors déposée à la surface de la palette P. Dans une variante, les équerres sont écartées l'une après l'autre pour déposer les produits avec plus de stabilité.

Les équerres 14 sont ensuite ramenées au poste de constitution 10.

Les déplacements des équerres 14 selon les axes X et Z sont préférentiellement combinés de manière à que les équerres 14 puissent être remontées, ou descendues, au poste de constitution 10 en diagonale (flèches B) depuis le poste d'empilement 11. Le fait de combiner les déplacements des équerres 14 permet de réduire le temps nécessaire à leur retour au poste de constitution 10 et donc d'augmenter la cadence d'empilement.

Lorsque les équerres 14 sont de nouveau au poste de constitution, elles sont déplacées selon l'axe Y de manière à prendre une position dans laquelle leur écartement est réduit de manière qu'elles coopèrent avec les extrémités des panneaux rainurés 12 constituant la couche 13 nouvellement constituée.

Les équerres 14 sont légèrement déplacées selon l'axe Z afin de décoller la couche 13 des convoyeurs 16.

Dès que les équerres 14 quittent le poste de constitution 10, le butoir 20 est replié en sorte que la couche dont la constitution a débutée achève sa constitution sur le butoir 17. Une autre couche peut dans l'intervalle commencer à être constituée contre le butoir 20 de nouveau escamoté.

Les équerres sont ensuite déplacées selon l'axe X jusqu'au-dessus du poste 11 d'empilement. La butée 18 est alors escamotée, puis les équerres 14 sont reculées jusqu'à venir en appui contre cette butée 18. La couche 13 est alors légèrement décalée de la couche précédemment déposée sur la palette P. La mise en oeuvre alternée des butées 18 et 19 permet de déposer des couches successives en quinconce, comme cela est représenté sur la figure 4. Ceci est intéressant pour augmenter la stabilité de l'empilement. Dans une variante, une seule des butées 18, 19 pourra être mise en oeuvre pour assurer une dépose classique des couches.

Les équerres 14 sont ensuite translatées selon l'axe Z vers la palette P jusqu'en proximité de la surface supérieure de la couche précédemment déposée sur la palette P.

Les équerres sont ensuite déplacées selon l'axe Y de telle manière qu'elles occupent une position dans laquelle elles sont éloignées l'une de l'autre en sorte qu'elles ne coopèrent plus avec les extrémités des panneaux rainurés 12 constituant la couche 13. La couche est alors déposée à la surface de la palette P.

Les équerres 14 sont ensuite ramenées au poste de constitution 10.

De nouveaux cycles de dépose peuvent être successivement mis en oeuvre pour assurer le remplissage de la palette P.

Lorsque le niveau de la dernière couche déposé atteint le niveau des convoyeurs 16, l'empilement des couches sur la palette peut continuer du fait que les équerres 14 peuvent être remontées selon l'axe Z, comme cela est représenté sur la figure 1.

Une installation selon l'invention peut donc permettre d'empiler des couches successives sur une grande hauteur.

Lorsque l'empilement de couches de panneaux rainurés est achevé, la palette P peut être déplacée. Elle peut par exemple être amenée à l'entrée de la tenonneuse de manière que soient ménagées des rainures dans les deux autres chants des panneaux rainurés. Les panneaux rainurés sont alors travaillés selon le sens de la largeur.

Les sous-ensembles 15 sont alors éloignés l'un de l'autre de manière que leur écartement permette d'assurer un empilement des panneaux rainurés dans le sens de la largeur.

De nouveaux cycles d'empilement sont ensuite mis en oeuvre jusqu'à ce que la palette P soit remplie.

Un palettiseur selon l'invention est donc très polyvalent dans la mesure où il permet de travailler des produits de tailles différentes.

### 7.4 Variantes

Dans une variante illustrée schématiquement à la figure 3, les sous-ensembles 15 comprennent un taquet de soutien 30 escamotable dans le prolongement des équerres 14. Un tel taquet peut être déployé lorsque les produits manipulés présentent une grande longueur afin d'assurer leur soutènement.

Dans une autre variante, les déplacements de chaque équerre 14 peuvent être désynchronisés. Ainsi, par exemple, la dépose d'une couche peut être obtenue en écartant une seule des équerres 14 d'une extrémité des produits 12, l'autre équerre 14 étant momentanément maintenue en contact avec leur autre extrémité. Ceci peut permettre de stabiliser les couches déposées alors qu'une autre opération y est réalisée (par exemple dépose d'intercalaire entre deux couches...).

Une variante peut consister à mettre en oeuvre un cycle de pré-empilement. Ce cycle consiste à empiler plusieurs couches de produits au poste de constitution, puis à déposer le pré-empilement ainsi constitué au poste d'empilement 11. Pour cela, dès qu'une couche est constituée au poste de constitution 10, elle est soulevée par les équerres. Une autre couche se forme alors en dessous d'elle. Dès que cette nouvelle couche est formée, la couche précédente est déposée dessus. Les deux couches sont alors soulevées par les équerres. Une autre couche se forme alors en dessous. Les couches précédemment constituées y sont ensuite déposées. Ceci peut être répété jusqu'à ce que suffisamment de couches soient pré-empilées, après quoi le pré-empilement est déposé dans le poste d'empilement.

Une autre variante peut consister à empiler des couches de largeur différentes. Dans ce cas, une première couche peut être constituée contre le butoir 17 puis déposée au poste d'empilement. Une seconde couche sera soulevée et transférée dès que le premier produit la composant dépassera par exemple le butoir 20. Ceci peut par exemple permettre d'équilibrer un empilement, en particulier lorsque les produits empilés présentent des tailles différentes.

Le fait de ne pas attendre que le premier produit constituant une couche arrive en appui contre le butoir 17 peut également permettre d'empiler des couches de plus faible largeur tout en diminuant le temps de cycle.

Dans une autre variante, un dispositif de dépose d'intercalaires peut être prévu au-dessus du poste d'empilement.

## Revendications

1. Installation d'empilement de produits, ladite installation comprenant :
- un poste de constitution (10) d'au moins une couche (13, 13') d'au moins un produit ((12) ;
- un poste d'empilement (11) de couches (13) successives de produit(s) (12),
ledit poste de constitution (10) comprenant au moins deux équerres (14) destinées à supporter des extrémités opposées dudit au moins un produit (12), lesdites équerres (14) étant mobiles le long de deux axes :
- un premier axe vertical (Z), et
- un deuxième horizontal (Y) entre au moins une position dans laquelle elles sont rapprochée pour supporter ladite couche (13) et une position dans laquelle elles sont éloignées pour assurer le dépôt de ladite couche (13) dans ledit poste d'empilement (11),
ledit poste d'empilement (11) étant implanté au sol (S) de manière décalée horizontalement par rapport audit poste de constitution (10), et l'installation comprenant des moyens d'entraînement des équerres (14) permettant d'entraîner lesdites équerres (14) le long d'un troisième axe (X) orthogonal aux premier (Z) et deuxième (Y) axes, **caractérisée en ce que** l'installation comprenne un sous-ensemble (15) mobile incluant lesdits moyens d'entraînement desdites équerres (14) et comprenne au moins une butée d'alignement vertical (19) de ladite couche (13) par rapport audit poste d'empilement (11), ledit sous-ensemble (15) mobile comprenant une deuxième butée d'alignement vertical (18) de ladite couche (13) par rapport audit poste d'empilement (11), lesdites première (19) et deuxième (18) butées étant décalées horizontalement l'une de l'autre pour permettre une dépose de couches (13) en quinconce dans ledit poste d'empilement (11).

2. Installation selon la revendication 1, **caractérisée en ce qu'**elle comprend deux sous-ensembles (15) mobiles comprenant chacun une desdites équerres (14), et disposés de part et d'autre dudit poste de constitution (10), au moins un desdits sous-ensembles (15) étant monté mobile par rapport audit poste de constitution (10) selon une direction permettant d'ajuster l'écartement entre lesdits sous-ensembles (15).

3. Installation selon l'une quelconque des revendications 1 ou 2, **caractérisée en ce que** ledit poste de constitution (10) comprend des moyens de constitution d'au moins une couche (13) desdits produits (12), lesdits moyens de constitution comprenant au moins un premier butoir (17) et des moyens d'acheminement desdits produits (12) contre ledit au moins un premier butoir (17).

4. Installation selon la revendication 3, **caractérisée en ce que** lesdits moyens de constitution comprennent un deuxième butoir (20) escamotable disposé en amont dudit premier butoir (17).

5. Installation selon la revendication 3 ou 4, **caractérisée en ce que** lesdits moyens d'acheminement comprennent au moins un convoyeur (16)_{.}

6. Installation selon la revendication 5, **caractérisée en ce que** ledit convoyeur (16) présente une entrée (E), ladite entrée (E) étant destinée à être placée dans le prolongement de la sortie (S) d'un poste de production desdits produits (12).

7. Installation selon l'une quelconque des revendications 2 à 6, **caractérisée en ce qu'**au moins un desdits sous-ensembles (15) comprend un taquet de soutien (30) escamotable dans le prolongement desdites équerres (14).

## Patentansprüche

1. Anlage zum Stapeln von Produkten, wobei die Anlage umfasst:
- eine Station (10) zur Bildung mindestens einer Schicht (13, 13') mindestens eines Produktes (12);
- eine Station zum Stapeln (11) von aufeinander folgenden Schichten (13) von Produkten (12),
wobei die Station zur Bildung (10) mindestens zwei Winkel (14) umfasst, die dazu bestimmt sind, gegenüberliegende Enden des mindestens einen Produktes (12) zu tragen, wobei die Winkel (14) entlang von zwei Achsen beweglich sind:
- einer ersten Vertikalachse (Z), und
- einer zweiten Horizontalachse (Y) zwischen mindestens einer Position, in der sie angenähert sind, um die Schicht (13) zu tragen, und einer Position, in der sie voneinander entfernt sind, um die Ablage der Schicht (13) in der Station zum Stapeln (11) zu gewährleisten,
wobei die Station zum Stapeln (11) am Boden (S) horizontal zur Station zur Bildung (10) versetzt aufgestellt ist, wobei die Anlage Antriebsmittel der Winkel (14) umfasst, die es ermöglichen, die Winkel (14) entlang einer dritten Achse (X) orthogonal zur ersten (Z) und zweiten (Y) Achse anzutreiben, **dadurch gekennzeichnet, dass** die Anlage eine bewegliche Untereinheit (15) umfasst, die die Antriebsmittel der Winkel (14) einschließt, und mindestens einen vertikalen Ausrichtanschlag (19) für die Schicht (13) in Bezug zur Station zum Stapeln (11) umfasst, wobei die bewegliche Untereinheit (15) einen zweiten vertikalen Ausrichtanschlag (18) für die Schicht (13) in Bezug zur Station zum Stapeln (11) umfasst, wobei der erste (19) und der zweite Anschlag (18) horizontal zueinander versetzt sind, um eine Zickzackablage von Schichten (13) in der Station zum Stapeln (11) zu ermöglichen.

2. Anlage nach Anspruch 1, **dadurch gekennzeichnet, dass** sie zwei bewegliche Untereinheiten (15) aufweist, jeder umfassend einen der Winkel (14) und angeordnet beiderseits der Station zur Bildung (10), wobei mindestens eine der Untereinheiten (15) in Bezug zur Station zur Bildung (10) in eine Richtung beweglich ist, die es ermöglicht, den Abstand zwischen den Untereinheiten (15) anzupassen.

3. Anlage nach einem der Ansprüche 1 oder 2, **dadurch gekennzeichnet, dass** die Station zur Bildung (10) Mittel zur Bildung mindestens einer Schicht (13) der Produkte (12) umfasst, wobei die Mittel zur Bildung mindestens einen Puffer (17) und Mittel zur Beförderung der Produkte (12) an den mindestens einen Puffer (17) umfassen.

4. Anlage nach Anspruch 3, **dadurch gekennzeichnet, dass** die Mittel zur Bildung einen zweiten einziehbaren Puffer (20) umfassen, der im vorgelagert des ersten Puffers (17) angeordnet ist.

5. Anlage nach Anspruch 3 oder 4, **dadurch gekennzeichnet, dass** die Mittel zur Beförderung mindestens ein Förderband (16) umfassen.

6. Anlage nach Anspruch 5, **dadurch gekennzeichnet, dass** das Förderband (16) einen Eingang (E) aufweist, wobei der Eingang (E) dazu bestimmt ist, in der Verlängerung des Ausgangs (S) einer Station zur Herstellung der Produkte (12) angeordnet zu werden.

7. Anlage nach einem der Ansprüche 2 bis 6, **dadurch gekennzeichnet, dass** mindestens eine der Untereinheiten (15) eine einziehbare Haltenklampe (30) in der Verlängerung der Winkel (14) umfasst.

## Claims

1. Installation for stacking of products, the said installation comprising:
- a unit (10) for constitution of at least one layer (13, 13') of at least one product (12);
- a unit (11) for stacking of successive layers (13) of product (s) (12);
the said constitution unit (10) comprising at least two angle brackets (14) which are designed to support opposite ends of the said at least one product (12), the said angle brackets (14) being mobile along two axes:
- a first, vertical axis (Z); and
- a second, horizontal axis (Y), between at least one position in which they are brought closer one another in order to support the said layer (13), and a position in which they are spaced in order to assure the depositing of the said layer (13) in the said stacking unit (11),
the said stacking unit (11) being implanted on the ground (S) in a manner which is offset horizontally relative to the said constitution unit (10), the installation comprising means for driving the angle brackets (14) which make it possible to drive the said angle brackets (14) along a third axis (X) orthogonal to the first (Z) and to the second (Y) axes, **characterised in that** the installation comprises a mobile sub-assembly (15) including the said means for driving the said angle brackets (14), and comprises at least one stop (19) for vertical alignment of the said layer (13) relative to the said stacking unit (11), the said mobile sub-assembly (15) comprising a second stop (18) for vertical alignment of the said layer (13) relative to the said stacking unit (11), the said first (19) and second (18) stops being offset horizontally from one another in order to permit depositing of layers (13) in staggered rows in the said stacking unit (11).

2. Installation according to claim 1, **characterised in that** it comprises two mobile sub-assemblies (15), each comprising one of the said angle brackets (14), and, arranged on both sides of the said constitution unit (10), at least one of the said sub-assemblies (15) being mounted such as to be mobile relative to the said constitution unit (10), according to a direction which makes it possible to adjust the spacing between the said sub-assemblies (15).

3. Installation according to either of claims 1 or 2, **characterised in that** the said constitution unit (10) comprises constitution means of at least one layer (13) of the said products (12), the said constitution means comprising at least one first buffer (17) and means for routing the said products (12) against the said at least one first buffer (17).

4. Installation according to claim 3, **characterised in that** the said constitution means comprise a second retractable buffer (20) which is arranged upstream from the said first buffer (17).

5. Installation according to claim 3 or 4, **characterised in that** the said routing means comprise at least one conveyor (16).

6. Installation according to claim 5, **characterised in that** the said conveyor (16) has an entry (E), the said entry (E) being designed to be placed in the extension of the exit (S) of a unit for production of the said products (12).

7. Installation according to any one of claims 2 to 6, **characterised in that** at least one of the said sub-assemblies (15) comprises a support carrier (30) which is retractable in the extension of the said angle brackets (14).
